# EUROPÄISCHE PATENTANMELDUNG

(11) **EP 4 155 272 A1**
(43) Veröffentlichungstag der Anmeldung: **29.03.2023**
(21) Anmeldenummer: 22193577.8
(22) Anmeldetag: 02.09.2022
(51) Int. Cl.: C02F 1/00, C02F 3/06, C02F 1/28, C02F 103/42, C02F 3/22, C02F 101/10, C02F 103/20

(54) **FILTERANLAGE ZUR REINIGUNG VON WASSER**

(30) Priorität: 22.09.2021 AT 1592021
(71) Anmelder: Aquarath e.U., 6832 Röthis (AT)
(72) Erfinder: Rath, Stefan, 6832 Röthis (AT)
(74) Vertreter: Torggler & Hofmann Patentanwälte - Rankweil

(57) **Zusammenfassung**

Filteranlage (1) zur Reinigung von Wasser, insbesondere für Schwimmteiche, Schwimmbecken, Fischteiche oder Fischbecken, aufweisend:
- mindestens einen Einlass (2) und mindestens einen Auslass (3a, 3b),
- mindestens eine Pumpe (22a, 22b),
- eine Primärfilterkammer (11), in die zumindest ein, einen Schüttschichtfilter bildendes, Schüttmaterial (12) eingefüllt ist,
- zumindest eine stromabwärts der Primärfilterkammer (11) angeordnete Aufbereitungskammer (31a, 31b),
wobei die Filteranlage (1) im Weiteren eine Rückführleitung (41) aufweist, die eine Rückführmündung (42) besitzt, welche in einem oberhalb des Schüttmaterials (12) ausgebildeten Sammelbereich (13) der Primärfilterkammer (11) unterhalb eines Normalwasserpegels (4) der Filteranlage (1) liegt, und dass mittels einer Ventilanordnung (7) der Filteranlage (1) in einem Normalbetriebszustand der Filteranlage (1) die Aufbereitungskammer (31a, 31b) ausgangsseitig mit dem Auslass (3a, 3b) fluidleitend verbunden ist und dass in einem Umlaufbetriebszustand der Filteranlage (1) die Aufbereitungskammer (31a, 31b) ausgangsseitig mit der Rückführmündung (42) fluidleitend verbunden ist. (Fig. 1)

## Beschreibung

Die vorliegende Erfindung betrifft eine Filteranlage zur Reinigung von Wasser, insbesondere für Schwimmteiche, Schwimmbecken, Fischteiche oder Fischbecken, aufweisend:
- mindestens einen Einlass zum Zuführen des zu reinigenden Wassers in die Filteranlage und mindestens einen Auslass zum Abführen des gereinigten Wassers aus der Filteranlage,
- eine Primärfilterkammer, in die zumindest ein, einen Schüttschichtfilter bildendes, Schüttmaterial zur Filtration des zu reinigenden Wassers eingefüllt ist,
- zumindest eine stromabwärts der Primärfilterkammer angeordnete Aufbereitungskammer, die ein Aufbereitungsmedium zur weiteren Reinigung des in der Primärfilterkammer vorgereinigten Wassers enthält,
- mindestens eine Pumpe, mit welcher in der Primärfilterkammer vorgereinigtes Wasser durch die Aufbereitungskammer förderbar ist,
- eine Ausgangsleitung zum Ausleiten des in der Aufbereitungskammer gereinigten Wassers zum Auslass der Filteranlage.
Im Weiteren bezieht sich die Erfindung auf ein Verfahren zur Reinigung von Wasser, insbesondere für Schwimmteiche, Schwimmbecken, Fischteiche oder Fischbecken, mittels einer Filteranlage.

Filteranlagen der eingangs genannten Art werden zum Reinigen von künstlichen Gewässern, insbesondere von künstlich angelegten Schwimmteichen, Schwimmbecken, Fischteichen oder Fischbecken eingesetzt, bei denen im Laufe der Zeit eine Verunreinigung des künstlich errichteten Gewässers, z.B. durch die Ansammlung von Material aus der Umgebung, z.B. aus organischem Material wie Pollen oder Blättern von Pflanzen, durch Ausscheidungen von in Fischteichen oder Fischbecken gehaltenen Wasserlebewesen oder aufgrund von Verunreinigung durch organische und/oder anorganische Partikel oder Substanzen während der Benutzung durch den Menschen, stattfindet. Durch das Hindurchleiten des verunreinigten Wassers durch eine Filteranlage der eingangs genannten Art werden derartige Verschmutzungen in der Filteranlage abgeschieden, und das gereinigte Wasser aus der Filteranlage wieder in das künstliche Gewässer zurückgefördert. Die Filteranlage bildet mit dem Gewässer somit einen Kreislauf.

Im Stand der Technik sind mehrstufige Filteranlagen bekannt, die zumindest zwei vom zu reinigenden Wasser hintereinander durchströmte Filter- oder Reinigungsstufen aufweisen. Im Weiteren ist bekannt, dass zumindest eine der Filterstufen ein sogenannter Bioreaktor, auch Biofilter genannt, sein kann, in dem Mikroorganismen, insbesondere Bakterienkulturen, angesiedelt sind, die durch Umwandlungsprozesse im Wasser befindliche organische Rückstände umwandeln und damit das Wasser weiter reinigen können.

Um das Filter- bzw. Reinigungsvermögen der Filteranlage aufrechtzuerhalten, ist diese von Zeit zu Zeit zu reinigen. Hierzu kann z.B. das Filtermedium und/oder das Aufbereitungsmedium der Filteranlage ausgetauscht werden, was jedoch aufwändig ist. Es ist auch bekannt, den im Filtermedium abgeschiedenen Schmutz durch Rückspülen, insbesondere durch Einleiten von Luft unterhalb des Filtermediums, zu lösen und diesen manuell oder mittels einer externen Pumpe abzuschöpfen.

Insbesondere beim Einsatz von Mikroorganismen in als Bioreaktor ausgebildeten Aufbereitungskammern ist darauf zu achten, dass diese auch während Zeiten, in denen der Schwimmteich, der Fischteich, das Schwimmbecken oder Fischbecken gereinigt oder beispielsweise im Winter abgelassen wird, mit ausreichend Wasser befeuchtet und mit Nährstoffen versorgt werden, damit diese für nachfolgende Reinigungsprozesse einsatzbereit bleiben. Sterben die Mikroorganismen ab, bilden sich aufgrund von Sauerstoffentzug Stickstoff und Fäulnisstoffe, wie Schwefelwasserstoff, im Wasser und es kommt deshalb zu einem sogenannten "Umkippen" des Wassers in der Filteranlage. Das Aufbereitungsmedium und/oder das Filtermedium ist dann zur Wiederinbetriebsetzung der Filteranlage unter Umständen vollständig zu tauschen.

Aufgabe der Erfindung ist es, eine verbesserte Filteranlage der eingangs genannten Art bereitzustellen, die eine hohe Reinigungsleistung und eine verbesserte Bedienerfreundlichkeit bietet.

Erfindungsgemäß gelingt dies mit einer Filteranlage nach Anspruch 1.

Bei der Filteranlage gemäß der Erfindung ist vorgesehen, dass die Filteranlage eine Rückführleitung aufweist, die eine Rückführmündung besitzt, welche in einem oberhalb des Schüttmaterials ausgebildeten Sammelbereich der Primärfilterkammer unterhalb eines Normalwasserpegels der Filteranlage liegt. Im Weiteren ist mittels einer Ventilanordnung der Filteranlage in einem Normalbetriebszustand der Filteranlage die Aufbereitungskammer ausgangsseitig über die Ausgangsleitung mit dem Auslass fluidleitend verbunden und die Rückführleitung blockiert. Weiters ist bei der erfindungsgemäßen Filteranlage vorgesehen, dass mittels der Ventilanordnung in einem Umlaufbetriebszustand der Filteranlage die Aufbereitungskammer ausgangsseitig über die Rückführleitung mit der Rückführmündung fluidleitend verbunden ist und die Ausgangsleitung blockiert ist, wobei mittels der Pumpe Wasser vom Ausgang der Aufbereitungskammer über die Rückführleitung in den Sammelbereich der Primärfilterkammer förderbar ist.

Die Ventilanordnung der Filteranlage ermöglicht es, zwischen einem Normalbetriebszustand, in dem die Filteranlage mit dem künstlichen Gewässer, insbesondere dem Schwimmteich, Schwimmbecken, Fischteich oder Fischbecken, einen Kreislauf zur Reinigung des verunreinigten Wassers bildet und einem Umlaufbetriebszustand, in dem das in der Filteranlage befindliche Wasser nach Art eines internen Kreislaufs umgewälzt wird, durch einfache Art und Weise umzuschalten. Im Umlaufbetriebszustand kann die Filteranlage unabhängig vom künstlichen Gewässer, insbesondere dem Schwimmteich, Schwimmbecken, Fischteich oder Fischbecken, betrieben werden, wobei z.B. im Winter oder während des Ablassens des Gewässers, ein interner Umlaufbetrieb der Filteranlage aktiviert werden kann. Durch den Umlaufbetrieb können in der Filteranlage angesiedelte Mikroorganismen am Leben erhalten werden.

Als Teich wird in dieser Schrift ein künstlich errichtetes Gewässer bezeichnet, das von einem Untergrund begrenzt ist, und zusätzlich zum Wasser loses Bodenmaterial und gegebenenfalls eine Bepflanzung enthält. Ein Fischteich weist in der Regel einen Besatz mit Lebewesen, insbesondere Fischen auf. Meist sind Teiche gegenüber dem Untergrund mittels einer Folie oder einem anderen geeigneten Dichtmaterial abgedichtet. Demgegenüber weist ein Becken im Allgemeinen einen glatten Abschluss auf und ist meist formstabil ausgeführt, insbesondere aus Kunststoff, Metall, Beton oder Holz. Insbesondere fehlt einem Schwimmbecken oder einem Fischbecken in der Regel ein loses Bodenmaterial oder eine Bepflanzung.

Bei dem den Schüttschichtfilter bildenden Schüttmaterial kann es sich um ein Granulat, insbesondere Kies, handeln, das vom zu reinigenden Wasser durchströmt wird. Beim Schüttmaterial handelt es sich um ein loses Material, das in die Primärfilterkammer eingefüllt ist. Derartige Schüttschichtfilter werden auch als Kiesfilter bezeichnet. Der Filtervorgang in einem Schüttschichtfilter könnte auch als Tiefenfiltration bezeichnet werden. Das Schüttmaterial ist günstigerweise porös und kann beispielsweise aus zerkleinertem Vulkangestein oder Lavagranulat bestehen. Derartige Schüttschichtfilter sind hinlänglich bekannt und dienen insbesondere der Grobfilterung des zu reinigenden Wassers. Die Korngröße des Schüttmaterials ist günstigerweise größer als 5 mm. Das zu reinigende Wasser durchfließt den in der Primärfilterkammer angeordneten Schüttschichtfilter insbesondere durch die auf das Wasser einwirkende Schwerkraft.

Der Schüttschichtfilter kann aus einem einzigen Schüttmaterial oder aus Schichten von unterschiedlichem Schüttmaterial oder von Schüttmaterial unterschiedlicher Korngrößen gebildet sein, die schichtartig übereinander angeordnet sind.

Das in der Aufbereitungskammer angeordnete Aufbereitungsmedium kann ein weiteres Schüttmaterial sein. Beispielsweise kann das Aufbereitungsmedium ein weiteres Filtermedium sein, mit dem eine weitere Filterung des Wassers durchgeführt wird. Stattdessen oder zusätzlich kann es sich beim Aufbereitungsmedium um eine Schüttung aus einem, insbesondere porösen, Material mit einer großen inneren Oberfläche handeln, wie z.B. Alumosilikat, insbesondere Zeolith, oder Aktivkohle etc. Es ist auch denkbar und möglich, sogenannte Phosphatabsorber zur Aufnahme von Phosphat als Aufbereitungsmedium einzusetzen. All diese Materialien zur weiteren Reinigung von Wasser sind hinlänglich bekannt.

Besonders bevorzugt ist es, wenn das Aufbereitungsmedium Mikroorganismen, insbesondere Bakterien, zur Reinigung, insbesondere zur Aufbereitung, des in der Primärfilterkammer vorgefilterten Wassers enthält. Vorteilhafterweise ist das Aufbereitungsmedium zum Besatz mit Mikroorganismen besonders geeignet, z.B. aufgrund einer großen inneren Oberfläche. Eine Mikroorganismen enthaltende Aufbereitungskammer könnte in diesem Zusammenhang auch als Bioreaktor oder Biofilter bezeichnet werden. In einem Mikroorganismen aufweisenden Aufbereitungsmedium laufen biologische Prozesse zur weiteren Aufbereitung bzw. Filterung des Wassers ab. Zusätzlich können auch im Schüttschichtfilter der Primärfilterkammer Mikroorganismen, insbesondere Bakterien, zum Reinigen des Wassers angesiedelt sein.

Durch das Aktivieren des Umlaufbetriebszustands mittels der Ventilanordnung kann auch in einem Zeitraum, in dem keine Zufuhr von zu reinigendem Wasser in die Filteranlage erfolgt, eine Befeuchtung von im Aufbereitungsmedium angesiedelten Mikroorganismen und eine Versorgung der Mikroorganismen mit Nährstoffen aufrechterhalten werden, ohne dass es zu einem "Umkippen" des Wassers in der Filteranlage, z.B. durch Unterschreiten eines Mindest-Sauerstoffgehalts oder durch Überschreiten eines kritischen Stickstoffgehalts im Wasser, kommt. D.h., durch den mittels der Ventilanordnung aktivierbaren Umlaufbetriebszustand kann das ökologische Gleichgewicht in der Filteranlage auf einfache und benutzerfreundliche Art und Weise aufrechterhalten werden.

Vorzugsweise ist die zumindest eine Pumpe stromaufwärts der zumindest einen Aufbereitungskammer angeordnet und pumpt zumindest einen Teil des vorgereinigten Wassers durch die Aufbereitungskammer, wobei das gereinigte Wasser mittels der Ventilanordnung wahlweise dem Auslass oder der Rückführmündung zuführbar ist.

Besonders bevorzugt ist es, wenn die Filteranlage mindestens zwei Aufbereitungskammern und mindestens zwei Pumpen umfasst, wobei jeweils eine der Pumpen stromaufwärts der jeweiligen Aufbereitungskammer angeordnet ist und zumindest einen Teil des vorgereinigten Wassers durch die jeweilige Aufbereitungskammer pumpt. In diesem Zusammenhang ist es möglich, dass die zumindest zwei Aufbereitungskammern unterschiedliche Aufbereitungsmedien enthalten, die je nach Bedarf zur weiteren Reinigung bzw. Aufbereitung des vorgereinigten Wassers eingesetzt werden können. Z.B. können vom Benutzer gemessene Nährstoffwerte im zu reinigenden Wasser zur Auswahl des jeweiligen Aufbereitungsmediums herangezogen werden.

Die Filteranlage weist stromabwärts der Primärfilterkammer günstigerweise mindestens eine Pumpkammer auf, wobei der mindestens einen Pumpkammer das in der Primärfilterkammer vorgereinigte Wasser zugeführt ist und eine Eingangsseite der jeweiligen Pumpe vorgereinigtes Wasser aus der Pumpkammer saugt. Die Pumpe, bzw. eine jeweilige der Pumpen, kann in der Pumpkammer oder einer der Pumpkammern angeordnet sein. Alternativ ist es auch denkbar und möglich, dass die Pumpe bzw. eine jeweilige der Pumpen, außerhalb der Pumpkammer angeordnet ist, wobei dann die Eingangsseite der jeweiligen Pumpe über eine Saugleitung vorgereinigtes Wasser aus der Pumpkammer saugt.

Bevorzugt weist die Filteranlage eine Bodenkammer auf, über die die Primärfilterkammer fluidleitend mit der zumindest einen Pumpkammer verbunden ist, wobei die Bodenkammer unterhalb der Primärfilterkammer angeordnet ist und durch eine, Öffnungen aufweisende, Trennwand von der Primärfilterkammer getrennt ist und in der Bodenkammer ein, Perforationen aufweisendes, Rohr zum Einbringen von Luft angeordnet ist. Die Bodenkammer schließt ausgangsseitig an die Primärfilterkammer an und ist mit dieser fluidleitend verbunden. Die Trennwand hält das in die Primärfilterkammer eingefüllte Schüttmaterial zurück und lässt vorgereinigtes Wasser durch. Die Trennwand könnte beispielsweise ein Gitter oder ein Lochblech oder ein Sieb sein. Der Durchmesser der Öffnungen ist kleiner als die kleinste Körnung des in die Primärfilterkammer eingefüllten Schüttmaterials.

Durch das Einbringen von Luft in den Bodenbereich der Primärfilterkammer über die Bodenkammer wird das im Schüttschichtfilter herausgefilterte Material, insbesondere Feststoffe und Eiweißverbindungen, durch den Luftstrom in den Sammelbereich der Primärfilterkammer rückgespült. Man könnte in diesem Sinne auch von einem Rückspülen der Primärfilterkammer sprechen.

Besonders bevorzugt weist die Filteranlage eine Entsorgungsleitung zum Ableiten von Schmutzwasser, welches in der Filteranlage abgeschiedenen Schmutz enthält, an einem Entsorgungsauslass der Filteranlage auf. An den Entsorgungsauslass könnte beispielsweise eine Kanalleitung angeschlossen sein, über die das Schmutzwasser der öffentlichen Kanalisation zugeführt werden wird. Durch das Vorsehen einer Entsorgungsleitung kann auf das Abschöpfen des Sammelbereichs zur Entfernung von Schmutzwasser mittels zusätzlicher Pumpen oder von Hand verzichtet werden.

Die Entsorgungsleitung ermöglicht es vorteilhafterweise, dass in einem ersten Entsorgungszustand der Filteranlage mittels der Ventilanordnung die Rückführmündung über die Entsorgungsleitung mit dem Entsorgungsauslass der Filteranlage fluidleitend verbunden ist und die Ausgangsleitung blockiert ist. Im ersten Entsorgungszustand kann Schmutzwasser, das in der Primärfilterkammer abgeschiedene Schmutzpartikel enthält, über die Rückführmündung an den Entsorgungsauslass aus der Filteranlage ausgeleitet werden.

Vorzugsweise ist in einem zweiten Entsorgungszustand der Filteranlage vorgesehen, dass mittels der Ventilanordnung die zumindest eine Aufbereitungskammer über die Entsorgungsleitung mit dem Entsorgungsauslass fluidleitend verbunden ist und die Ausgangsleitung und die Rückführleitung blockiert sind. Im zweiten Entsorgungszustand kann das durch die zumindest eine Aufbereitungskammer hindurchgeleitete Wasser, insbesondere zur Reinigung des Aufbereitungsmediums selbst, direkt an den Entsorgungsauslass entsorgt werden. Die jeweilige Pumpe ist dabei zum Hindurchleiten von vorgereinigtem Wasser durch die zumindest eine Aufbereitungskammer eingeschaltet.

Bevorzugt weist die Filteranlage eine Fördereinrichtung auf, von der ein Teil des in der Primärfilterkammer vorgereinigten Wassers über ein in den Sammelbereich mündendes Ausgangsrohr zurück in den Sammelbereich förderbar ist. Durch die zusätzliche Fördereinrichtung kann Wasser zurück in den Sammelbereich gefördert werden, um dieses wiederholt durch den Schüttschichtfilter zu fördern. Die Fördereinrichtung könnte z.B. ein Luftheber sein, dessen Einlassöffnung in der Pumpkammer oder einer der Pumpkammern liegt. Mit einem Luftheber steigt, durch Einbringen von Luft unterhalb des Wasserspiegels, Luft unter Mitnahme von Wasser im Ausgangsrohr auf. Luftheber werden auch Druckluftheber oder Mammutpumpe genannt und sind hinlänglich bekannt. Zusätzlich zum Pumpen von vorgereinigtem Wasser zurück in den Sammelbereich, wird die Wasserqualität durch das Einblasen von Luft mit Sauerstoff angereichert und Kohlendioxid aus dem Wasser ausgetrieben. Alternativ könnte die Fördereinrichtung eine elektrisch betriebene Förderpumpe und das Ausgangsrohr einen Diffusor oder einen Sprühkopf zur Anreicherung mit Luft umfassen.

Die Erfindung bezieht sich auch auf ein Verfahren zur Reinigung von Wasser mittels einer Filteranlage. Im Normalbetriebszustand der Filteranlage wird zu reinigendes Wasser über den mindestens einen Einlass dem Sammelbereich der Primärfilterkammer zugeführt und das zu reinigende Wasser im Schüttschichtfilter gefiltert, welches als vorgereinigtes Wasser den Schüttschichtfilter verlässt, und danach wird das vorgereinigte Wasser der Aufbereitungskammer zugeführt und in der Aufbereitungskammer weiter gereinigt und im Weiteren verlässt das in der Aufbereitungskammer gereinigte Wasser die Filteranlage über den Auslass. Erfindungsgemäß ist vorgesehen, dass im Normalbetriebszustand mittels der Ventilanordnung die Aufbereitungskammer ausgangsseitig über die Ausgangsleitung mit dem Auslass fluidleitend verbunden ist und die Rückführleitung blockiert ist, und dass im Umlaufbetriebszustand der Filteranlage mittels der Ventilanordnung die Aufbereitungskammer ausgangsseitig über die Rückführleitung mit der Rückführmündung fluidleitend verbunden ist und die Ausgangsleitung blockiert ist, wobei Wasser, welches die Aufbereitungskammer durchlaufen hat, vom Ausgang der Aufbereitungskammer über die Rückführleitung in den Sammelbereich der Primärfilterkammer zurückgefördert wird. Durch das Vorsehen der Ventilanordnung und die fluidleitende Verbindung im Normalbetriebszustand zwischen der Aufbereitungskammer und der Ausgangsleitung und im Umlaufbetriebszustand zwischen der Aufbereitungskammer und der Rückführmündung kann ein bedienerfreundlicher und einfacher Wechsel der Betriebsart der Filteranlage durchgeführt werden.

Bevorzugt ist vorgesehen, dass zum Rückspülen der Primärfilterkammer im Bodenbereich der Primärfilterkammer Luft eingeblasen wird und dass während des Rückspülens oder nach dem Rückspülen der Primärfilterkammer im ersten Entsorgungszustand der Filteranlage Schmutzwasser über die Entsorgungsleitung, welche über die Ventilanordnung mit der Rückführmündung verbunden ist, dem Entsorgungsauslass der Filteranlage zugeführt wird und entsorgt wird.

Im zweiten Entsorgungszustand der Filteranlage ist vorgesehen, dass Wasser, welches die mindestens eine Aufbereitungskammer durchlaufen hat, mittels der Ventilanordnung über die Entsorgungsleitung dem Entsorgungsauslass zugeführt wird und entsorgt wird.

Bevorzugt ist weiters vorgesehen, dass zumindest ein Teil des vorgereinigten Wassers nach dem Durchlaufen der Primärfilterkammer mittels der Fördereinrichtung, insbesondere durch Einleiten von Luft, über das in den Sammelbereich mündende Ausgangsrohr zurück in den Sammelbereich gefördert wird.

Weitere Vorteile und Einzelheiten der Erfindung werden anhand der in den Figuren gezeigten Ausführungsbeispiele erfindungsgemäßer Filteranlagen erläutert. Es zeigen:
- Fig. 1: eine schematische Darstellung einer erfindungsgemäßen Filteranlage;
- Fig. 2: einen Auszug aus Fig. 1, der die Ventilanordnung und weitere Komponenten der Filteranlage im Detail zeigt;
- Fig. 3: eine isometrische Ansicht einer abgewandelten erfindungsgemäßen Filteranlage, die auf dem Ausführungsbeispiel gemäß Fig. 1 basiert, und bei der ein Deckel abgenommen ist;
- Fig. 4: eine Ansicht von oben auf die Filteranlage gemäß Fig. 3;
- Fig. 5: eine Ansicht analog zu Fig. 4, bei der eine Trennwand, die eine Primärfilterkammer von einer Bodenkammer der Filteranlage trennt, entfernt ist;
- Fig. 6: den Schnitt A-A gemäß Fig. 5, und
- Fig. 7: den Schnitt B-B gemäß Fig. 5.

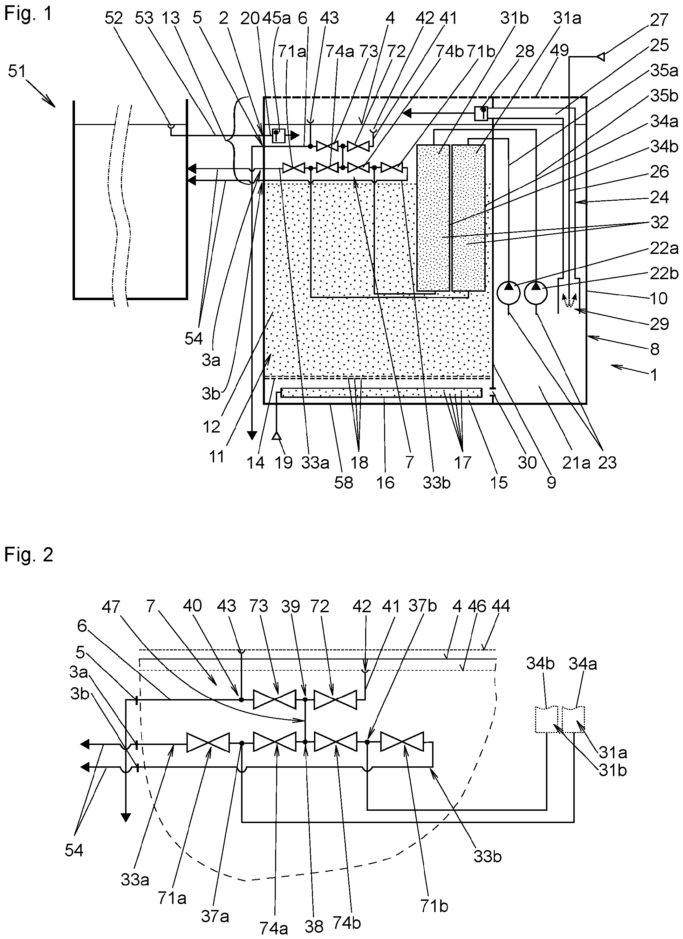

Anhand des in Fig. 1 dargestellten Ausführungsbeispiels einer erfindungsgemäßen Filteranlage 1 wird der Aufbau und die Funktionsweise, sowie ein Verfahren zum Reinigen von verunreinigtem Wasser mit der Filteranlage 1 erläutert. Die Darstellung ist schematisch, sodass insbesondere Leitungsverbindungen mit durchgezogenen Linien vereinfacht dargestellt sind. Für die Fließrichtung, sowie für Ventile, Pumpen, Luftanschlüsse, Rücklaufsperren etc. sind entsprechende, i.d.R. selbsterklärende, Symbole verwendet.

Fig. 1 zeigt eine Anordnung mit einem Becken 51, insbesondere einem Schwimm- oder Fischbecken. Der Begriff Becken ist in diesem Zusammenhang weit zu fassen. Insbesondere kann es sich beim Becken 51 auch um einen Fisch- oder Schwimmteich oder ein Großaquarium handeln. Das Becken 51 enthält unabhängig von seiner Gestalt zu reinigendes Wasser, welches auch als künstliches Gewässer bezeichnet werden kann.

Die Filteranlage 1 weist im Ausführungsbeispiel einen Behälter 8 auf, in dem eine Primärfilterkammer 11 und eine Pumpkammer 21a sowie eine Bodenkammer 15 angeordnet sind. Die Primärfilterkammer 11 und die Pumpkammer 21a sowie die Bodenkammer 15 sind von einer Außenwand 10 des Behälters 8 in horizontaler Richtung begrenzt. Der Behälter 8 weist im Weiteren einen den Behälter 8 in vertikaler Richtung nach unten verschließenden Boden 58, der an die Außenwand 10 anschließt. Der Boden 58 begrenzt die Bodenkammer 15 und die Pumpkammer 21a in vertikaler Richtung nach unten. Ein, Öffnungen aufweisender, abnehmbarer Deckel 49 begrenzt die Primärfilterkammer 11 und die Pumpkammer 21a auf einer dem Boden 58 gegenüberliegenden Seite.

In der Primärfilterkammer 11 ist ein Schüttmaterial 12, z.B. Kies und/oder poröses Material, wie Vulkangestein oder Glasschlacke, mit einer Körnung von mehr als 5 mm eingefüllt, das einen Schüttschichtfilter bildet, wie dies hinlänglich bekannt ist.

Die Filteranlage 1 weist einen Einlass 2 auf, dem über ein Zuführrohr 53 das zu reinigende Wasser aus dem Becken 51 zuführbar ist. Eine Wasserzuführleitung 20 der Filteranlage 1 schließt an den Einlass 2 an und durchdringt die Außenwand 10, und mündet in einen Sammelbereich 13 der Primärfilterkammer 1, der oberhalb des Schüttmaterials 12 ausgebildet ist. In der Wasserzuführleitung 20 ist eine Rücklaufsperre 45a angeordnet, die ein Zurücklaufen von Wasser aus dem Sammelbereich 13 in Richtung hin zum Einlass 2 und zum Becken 51 verhindert.

Zwischen der Primärfilterkammer 11 und der Pumpkammer 21a ist eine Zwischenwand 9 des Behälters 8 angeordnet, die die Primärfilterkammer 11 und die Pumpkammer 21a vollständig voneinander abtrennt. Zwischen der Primärfilterkammer 11 und der Bodenkammer 15 ist unterhalb der Primärfilterkammer 11 eine, Öffnungen 18 aufweisende, Trennwand 14 angeordnet, die die Primärfilterkammer 11 von der Bodenkammer 15 trennt. Die Öffnungen 18 weisen einen Durchmesser auf, der kleiner ist als eine kleinste Körnung des Schüttmaterials 12. D.h., die Trennwand 14 hält das Schüttmaterial 12 in der Primärfilterkammer 11 zurück und lässt Wasser aus der Primärfilterkammer 11 durch die Öffnungen 18 hindurch in die Bodenkammer 15. Die Trennwand 14 kann z.B. von einem Sieb oder einem Gitter gebildet sein. Insbesondere könnte die Trennwand 14 auch als Siebboden oder Trennboden bezeichnet werden.

In der Bodenkammer 15 ist ein, mit einem Luftanschluss 19 verbundenes, Rohr 16 angeordnet, das Perforationen 17 aufweist. Die Perforationen 17 sind in Umfangsrichtung verteilt am Rohr 16 angeordnet, wie dies mit Punkten symbolisch dargestellt ist. Durch das Rohr 16 kann Luft in die Bodenkammer 15 eingebracht werden, was im Weiteren noch im Detail erläutert wird. Das Rohr 16 könnte auch als Rohrleitung oder Rohranordnung bezeichnet werden. Alternativ könnten mehrere, mit dem Luftanschluss verbundene, Rohre in der Bodenkammer angeordnet sein.

Die Zwischenwand 9 schließt im Ausführungsbeispiel an den Boden 58 an, wobei zwischen der Bodenkammer 15 und der Pumpkammer 21a zumindest eine Öffnung 30 angeordnet ist, die die Bodenkammer 15 mit der Pumpkammer 21a fluidleitend verbindet.

Die Pumpkammer 21a ist stromabwärts der Primärfilterkammer 11 angeordnet, wobei im Schüttschichtfilter der Primärfilterkammer 11 vorgereinigtes Wasser über die fluidleitende Bodenkammer 15 in die Pumpkammer 21a gelangen kann.

In der Pumpkammer 21a ist im Ausführungsbeispiel eine erste Pumpe 22a angeordnet, mit der über eine Eingangsseite 23 der Pumpe 22a Wasser aus der Pumpkammer 21a saugbar ist. Eine erste Druckleitung 35a verbindet die Pumpe 22a fluidleitend mit einem ersten Aufbereitungsbehälter 34a, in dem eine erste Aufbereitungskammer 31a mit einem Aufbereitungsmedium 32 zur weiteren Reinigung des Wassers angeordnet ist. D.h., mit der Pumpe 22a ist in der Primärfilterkammer 11 vorgereinigtes Wasser durch die Aufbereitungskammer 31a förderbar. An die Aufbereitungskammer 31a schließt eine Ausgangsleitung 33a zum Ableiten von aufbereitetem, d.h. gereinigtem Wasser, aus der Aufbereitungskammer 31a an einen Auslass 3a an. An den Auslass 3a ist ein Rückführrohr 54 angeschlossen, welches das Wasser in das Becken 51 zurückleitet.

Im Ausführungsbeispiel ist in der Pumpkammer 21a im Weiteren eine zweite Pumpe 22b angeordnet, mit der über eine Eingangsseite 23 der Pumpe 22b Wasser aus der Pumpkammer 21a saugbar ist. Eine zweite Druckleitung 35b verbindet die Pumpe 22b fluidleitend mit einem zweiten Aufbereitungsbehälter 34b, in dem eine zweite Aufbereitungskammer 31b mit einem Aufbereitungsmedium 32 zur weiteren Reinigung des Wassers angeordnet ist. D.h., mit der Pumpe 22b ist in der Primärfilterkammer 11 vorgereinigtes Wasser durch die Aufbereitungskammer 31b förderbar. An die Aufbereitungskammer 31b schließt eine Ausgangsleitung 33b zum Ableiten von gereinigtem Wasser aus der Aufbereitungskammer 31b an einen Auslass 3b an. An den Auslass 3b ist ein weiteres Rückführrohr 54 angeschlossen, welches das Wasser zurück in das Becken 51 leitet.

Die Aufbereitungsmedien 32 in den Aufbereitungskammern 31a, 31b können identisch oder unterschiedlich sein. Z.B. können beide Aufbereitungsmedien 32 Mikroorganismen zur weiteren Reinigung des Wassers enthalten. Beispielsweise könnte eine der Aufbereitungskammern 31a, 31b Zeolith enthalten und die andere der Aufbereitungskammern 31a, 31b Aktivkohle. Die Art des Aufbereitungsmediums 32 kann in Abhängigkeit von der Verschmutzung des zu reinigenden Wassers gewählt werden, wie eingangs erläutert. Ergänzend wird darauf hingewiesen, dass in Fig. 2 aus Gründen der Übersichtlichkeit nur jeweils ein Ausgangsabschnitt des jeweiligen Aufbereitungsbehälters 34a, 34b dargestellt ist.

Die Filteranlage 1 weist im Weiteren eine Rückführleitung 41 auf, die eine Rückführmündung 42 besitzt, vgl. Fig. 1 und Fig. 2. Die Rückführmündung 42 liegt im oberhalb des Schüttmaterials 12 ausgebildeten Sammelbereich 13 der Primärfilterkammer 11 unterhalb eines Normalwasserpegels 4 der Filteranlage 1. Der Normalwasserpegel 4 ist in den Fig. 1 und 2 eingezeichnet und markiert einen Zustand, in dem der Wasserstand in der Filteranlage dem Wasserstand im Becken 51 entspricht. Der Wasserpegel, der sich auf der Höhe der Rückführmündung 42 befindet, wird im Rahmen dieser Schrift als Niedrigwasserpegel 46 bezeichnet und ist in Fig. 2 gesondert eingezeichnet.

Die Filteranlage 1 weist im Weiteren einen Überlauf 43 auf, der mittels eines T-Stücks 40 mit einer Entsorgungsleitung 6 verbunden ist. Die Entsorgungsleitung 6 verbindet den Überlauf 43 fluidleitend mit einem Entsorgungsauslass 5 der Filteranlage 1. Der Überlauf 43 weist eine nicht näher bezeichnete Überlaufmündung auf, die oberhalb des Normalwasserpegels 4 liegt. In Fig. 2 ist hierzu der Überlaufwasserpegel 44 eingezeichnet, der jenen Wasserstand im Sammelbereich 13 markiert, bei dem Wasser über den Überlauf 43 über die Entsorgungsleitung 6 an den Entsorgungsauslass 5 und dann weiter, z.B. in eine Kanalisation, geleitet werden kann. Steigt der Wasserstand im Becken 51, z.B. durch Niederschlag, so dient der Überlauf 43 der Abfuhr des überschüssigen Wassers und verhindert ein Überlaufen des Beckens 51 und der Filteranlage 1.

Als T-Stück wird im Rahmen dieser Schrift eine Verzweigung bezeichnet, die drei Leitungen miteinander fluidleitend verbindet bzw. eine Abzweigung von einer durchgehenden Leitung bildet.

Ein T-Stück 39 verbindet die Verbindungsleitung 47 und die Rückführleitung 41 sowie einen vom Entsorgungsauslass 5 abgelegenen Abschnitt der Entsorgungsleitung 6 fluidleitend miteinander.

Die Filteranlage 1 umfasst eine Ventilanordnung 7 mit in der jeweiligen Ausgangsleitung 33a, 33b angeordneten Ausgangs-Sperrventilen 71a, 71b, die in einer Schließstellung die jeweilige Ausgangsleitung 33a, 33b blockieren, d.h. ein Ausströmen von Flüssigkeit aus der Aufbereitungskammer 31a, 31b an den jeweiligen Auslass 3a, 3b verhindern, und die in einer Offenstellung die jeweiligen Aufbereitungskammer 31a, 31b mit dem jeweiligen Auslass 3a, 3b fluidleitend verbinden, vgl. Fig. 2.

Die Ventilanordnung 7 umfasst im Weiteren ein Ausleit-Sperrventil 74a, das im Ausführungsbeispiel stromaufwärts des Ausgangs-Sperrventils 71a mittels eines T-Stücks 37a über einen, vom Auslass 3a abgelegenen, Abschnitt der Ausgangsleitung 33a fluidleitend mit der Aufbereitungskammer 31a verbunden ist. Ein Ausleit-Sperrventil 74b der Ventilanordnung 7 ist in analoger Weise mit der Aufbereitungskammer 31b über ein in der Ausgangsleitung 33b angeordnetes T-Stück 37b fluidleitend verbunden. Ein T-Stück 38 verbindet die der jeweiligen Aufbereitungskammer 31a, 31b abgelegenen Seite der Ausleit-Sperrventile 74a, 74b, fluidleitend miteinander. An das T-Stück 38 schließt im Weiteren die Verbindungsleitung 47 an.

Die Rückführleitung 41 ist mittels des Rücklauf-Sperrventils 72 der Ventilanordnung 7 in einer Schließstellung des Rücklauf-Sperrventils 72 blockiert und in einer Offenstellung des Rücklauf-Sperrventils 72 geöffnet.

Zusätzlich umfasst die Ventilanordnung 7 ein Entsorgungs-Sperrventil 73, das stromaufwärts des T-Stücks 40 in der Entsorgungsleitung 6 angeordnet ist. In einem Schließzustand des Entsorgungs-Sperrventils 73 ist die Entsorgungsleitung stromaufwärts des T-Stücks 40, in dem der Überlauf 43 in die Entsorgungsleitung 6 mündet, blockierbar.

Die Filteranlage 1 weist im in Fig. 1 dargestellten Ausführungsbeispiel eine Fördereinrichtung 24 auf, mit der zumindest ein Teil des in der Primärfilterkammer 11 vorgereinigten Wassers aus der Pumpkammer 21a über ein in den Sammelbereich 13 mündendes Ausgangsrohr 25 der Fördereinrichtung 25 zurück in den Sammelbereich 13 gefördert werden kann.

Die Fördereinrichtung 24 ist im Ausführungsbeispiel als sogenannter Luftheber (auch Druckluftheber oder Mammutpumpe genannt) ausgeführt und weist einen Lufteinlass 27 für Druckluft und eine im Ausführungsbeispiel im Ausgangsrohr liegende Luftzuführleitung 26 zum Einleiten der Luft vom Lufteinlass 27 an eine Einlassöffnung 29 der Fördereinrichtung auf, vgl. die gepunkteten Pfeile im Bereich der Einlassöffnung 29. Die Einlassöffnung 29 ist zur Pumpkammer 21a hin offen. Durch das Einleiten von Luft in die Einlassöffnung 29 wird vorgereinigtes Wasser aus der Pumpkammer 21a angesaugt und steigt, aufgrund des Auftriebs der Luftbläschen, zusammen mit der Luft in vertikaler Richtung nach oben und verlässt im Weiteren über das Ausgangsrohr 25 die Fördereinrichtung 24. Die über das Ausgangsrohr 25, das auch als Steigrohr bezeichnet werden könnte, ausgestoßene Luft verlässt die Filteranlage 1 durch die im Deckel 49 angeordnete Öffnungen, die in Fig. 1 durch eine gestrichelte Linie angedeutet sind. Das Ausgangsrohr 25 weist eine Rücklaufsperre 28 auf, die ein Rückströmen vom Wasser aus dem Sammelbereich 13 über die Fördereinrichtung 24 in die Pumpkammer 21a verhindert.

Die Fördereinrichtung 24 dient im Ausführungsbeispiel zur Rückförderung von vorgereinigtem Wasser aus der Pumpkammer 21a in den Sammelbereich 13 und insbesondere zur Anreicherung des vorgereinigten Wassers mit Sauerstoff, der über die Luft zugeführt wird, und zum Austreiben von Kohlendioxid aus dem Wasser.

In einem Normalbetriebszustand der Filteranlage 1 fließt zu reinigendes Wasser über das Zuführrohr 53 sowie den Einlass 2 und im Weiteren die Wasserzuführleitung 20 in den Sammelbereich 13 der Primärfilterkammer 11. Das zu reinigende Wasser sickert danach aus dem Sammelbereich 13 durch den Schüttschichtfilter und wird dort gefiltert, wobei Schmutzpartikel und andere Rückstände an dem Schichtmaterial 12 anhaften bzw. aus dem Wasser abgeschieden werden. Das, insbesondere aufgrund der Schwerkraft, durch das Schichtmaterial 12 sickernde Wasser verlässt als vorgereinigtes Wasser die Primärfilterkammer 11, wobei das vorgereinigte Wasser durch die Öffnungen 18 der Trennwand 14 in die Bodenkammer 15 strömt bzw. rinnt. Im Weiteren durchfließt das vorgereinigte Wasser über die Öffnung 30 die Bodenkammer 15 und strömt in die Pumpkammer 21a. Im Normalbetriebszustand sind die Pumpen 22a, 22b aktiviert und saugen über die jeweilige Eingangsseite 23 das vorgereinigte Wasser aus der Pumpkammer 21a an, und führen dieses stromabwärts über die Druckleitung 35a, 35b dem jeweiligen Aufbereitungsbehälter 34a, 34b zu.

In der Aufbereitungskammer 31a, 31b wird das vorgereinigte Wasser weiter gereinigt, insbesondere aufbereitet. Die Ausgangs-Sperrventile 71a, 71b sind im Normalbetriebszustand geöffnet, sodass die Aufbereitungskammer 31a, 31b jeweils ausgangsseitig über die Ausgangsleitung 33a, 33b mit dem Auslass 3a, 3b fluidleitend verbunden ist und das gereinigte Wasser die Filteranlage 1 verlässt und über die Rückführrohre 54 dem Becken 51 zugeführt wird. Die Ausleit-Sperrventile 74a, 74b und das Rücklauf-Sperrventil 72, sowie das Entsorgungs-Sperrventil 73 sind im Normalbetriebszustand geschlossen und damit sind die Rückführleitung 41 und die Entsorgungs-Leitung 6, stromaufwärts des T-Stücks 43, blockiert. Im Normalbetriebszustand bildet die Filteranlage 1 mit dem Becken 51 einen Kreislauf.

Die Pumpen 22a, 22b sind im Ausführungsbeispiel unabhängig voneinander ansteuerbar. Beispielsweise ist es im Normalbetriebszustand der Filteranlage 1 möglich, nur eine der Aufbereitungskammern 31a, 31b zur weiteren Reinigung des Wassers zu verwenden. Dies kann insbesondere bei unterschiedlichen in den Aufbereitungskammern 31a, 31b angeordneten Aufbereitungsmedien 32 zweckmäßig sein, wie dies eingangs erläutert ist.

In einem Umlaufbetriebszustand der Filteranlage 1 sind die Aufbereitungskammern 31a, 31b ausgangsseitig über die Rückführleitung 41 mit der Rückführmündung 42 fluidleitend verbunden, wobei das jeweilige Ausgangs-Sperrventil 71a geschlossen und das jeweilige Ausleit-Sperrventil 74a, 74b geöffnet ist. D.h., die Ausgangsleitungen 33a, 33b sind stromabwärts des jeweiligen T-Stücks 37a, 37b blockiert. Im Weiteren ist das Rücklauf-Sperrventil 72 geöffnet, während das Entsorgungs-Sperrventil 73 geschlossen ist.

Vorgereinigtes Wasser, welches mittels der eingeschalteten Pumpen 22a, 22b aus der Pumpkammer 21a durch die jeweilige Aufbereitungskammer 31a, 31b gepumpt wird, durchströmt somit das jeweilige Ausleit-Sperrventil 74a, 74b, und fließt danach, zusammenfasst durch die Verbindungsleitung 47, in die Rückführleitung 41, sowie durch das geöffnete Rücklauf-Sperrventil 72 und tritt über die Rückführmündung 42 in den Sammelbereich 13 der Primärfilterkammer 11 über. Das im Sammelbereich 13 befindliche Wasser sickert danach wiederum durch den Schüttschichtfilter in die Bodenkammer 15 und im Weiteren in die Pumpkammer 21a.

Wie auch schon im vorhin beschriebenen Normalbetriebszustand kann im Umlaufbetriebszustand nur eine der Pumpen 22a, 22b, insbesondere wechselweise mit der anderen der Pumpen 22a, 22b, oder es können beide zusammen betrieben werden, um Wasser zurück in den Sammelbereich 13 zu fördern.

Im Umlaufbetriebszustand, der auch als autonomer oder interner Umlaufbetrieb der Filteranlage 1 bezeichnet werden könnte, wird ein interner Kreislauf des in der Filteranlage 1 befindlichen Wassers gebildet, wobei das Wasser durch die Aufbereitungsbehälter 31a, 31b geleitet wird. Der Umlaufbetrieb des Wassers in der Filteranlage 1 wird dabei unabhängig vom Wasserstand im Becken 51 aufrechterhalten, ohne dass gereinigtes Wasser zurück in das Becken 51 gefördert wird. Beispielsweise kann das Becken 51 während des Umlaufbetriebs der Filteranlage 1 gereinigt werden. Der Umlaufbetriebszustand dient z.B. dazu, während des Winters eine Reinigung des in der Filteranlage 1 vorhandenen Wassers durchzuführen bzw. das Aufbereitungsmedium 32 regelmäßig durchzuspülen, um Mikroorganismen mit Nährstoffen und Wasser zu versorgen.

Mittels der Ventilanordnung 7 ist es bei eigeschalteten Pumpen 22a, 22b daher möglich, Wasser aus der jeweiligen Aufbereitungskammer 31a, 31b wahlweise der Rückführmündung 42 oder dem jeweiligen Auslass 3a, 3b zuzuführen.

Sowohl im Normalbetriebszustand, als auch im Umlaufbetriebszustand kann die Fördereinrichtung 24 optional zur Anreicherung des Wassers mit Sauerstoff aktiviert werden.

Zur Reinigung des in der Primärfilterkammer 11 angeordneten Schüttschichtfilters, kann Luft über den Bodenbereich der Primärfilterkammer 11 eingeleitet werden. Im Ausführungsbeispiel wird hierzu Luft über den Luftanschluss 19 in das Rohr 16 geblasen, wobei die Luft über die Perforationen 17 in die Bodenkammer 15 eintritt. Durch den Auftrieb steigen Luftbläschen durch die Öffnungen 18 der Trennwand 14 in die Primärfilterkammer 11 auf und durchströmen den Schüttschichtfilter nach oben in Richtung hin zum Sammelbereich 13. Beim Durchströmen des Schüttschichtfilters mit Luft werden am Schüttmaterial 12 anhaftende Schmutzpartikel, z.B. Eiweißverbindungen oder Feststoffpartikel, gelöst und an die Wasseroberfläche des Sammelbereichs 13 mitgefördert. Während dieses Vorgangs, der als Rückspülen der Primärfilterkammer 11 bezeichnet werden kann, oder danach werden die an die Oberfläche gespülten Schmutzpartikel aus der Filteranlage 1 entfernt. Hierzu sind in einem ersten Entsorgungszustand der Filteranlage 1 die Pumpen 22a, 22b ausgeschaltet, sowie die Ausgangs-Sperrventile 71a, 71b geschlossen und blockieren die somit die Ausgangsleitungen 33a, 33b. Weiters sind die Ausleit-Sperrventile 74a, 74b geschlossen, damit kein Schmutzwasser aus dem Sammelbereich 13 in die Aufbereitungskammern 31a, 31b gelangen kann. Das Rücklauf-Sperrventil 72 und das Entsorgungs-Sperrventil 73 sind geöffnet, sodass eine fluidleitende Verbindung zwischen der Rückführmündung 42 und dem Entsorgungsauslass 5 über die Entsorgungsleitung 6 hergestellt ist. Dadurch kann das Schmutzwasser, welches im Schüttschichtfilter abgeschiedene Schmutzpartikel enthält, über die Rückführmündung 42 aus der Filteranlage 1 abgeleitet und entsorgt werden. Während des ersten Entsorgungszustands kann bei Bedarf zusätzlich sauberes Wasser, z.B. über einen in den Sammelbereich 13 mündenden Schlauch, in den Sammelbereich 13 gefördert werden. Dies ist in den Figuren nicht gesondert dargestellt.

Um die Filteranlage 1 nach dem Rückspülen der Primärfilterkammer 11 wieder in Betrieb zu nehmen, kann in einem ersten Schritt die Fördereinrichtung 24 durch Einblasen von Luft aktiviert werden. Die Fördereinrichtung 24 wird so lange betrieben, bis klares Wasser aus der Pumpkammer 21a über das Ausgangsrohr 25 in den Sammelbereich 13 gelangt. In einem weiteren Schritt werden das Entsorgungs-Sperrventil 73 geschlossen und die Ausleit-Sperrventile 74a, 74b geöffnet, wobei die Pumpen 22a, 22b kurzzeitig eingeschaltet werden, um in der Verbindungsleitung 47 und der Entsorgungsleitung 41 befindliches Schmutzwasser in den Sammelbereich 13 auszustoßen. Danach kann der Normalbetriebszustand der Filteranlage 1, wie zuvor beschrieben, eingestellt werden, wobei hierzu die Ausgangs-Sperrventile 71a, 71b geöffnet, und das Rücklauf-Sperrventil 72 und die Ausleit-Sperrventile 74a, 74b geschlossen werden.

Durch das Rückspülen der Primärfilterkammer 11 wird der Schüttschichtfilter zumindest zum Teil, vorzugsweise vollständig, regeneriert und steht, nach dem Entfernen der rückgespülten Schmutzpartikel aus dem Sammelbereich 13 für den Normalbetriebszustand der Filteranlage 1 zur Verfügung.

In einem zweiten Entsorgungszustand der Filteranlage 1 kann die jeweilige Aufbereitungskammer 31a, 31b zur Reinigung durchgespült werden. Hierzu wird die jeweilige Pumpe 21a, 21b eingeschaltet und vorgereinigtes Wasser durch die entsprechende Aufbereitungskammer 31a, 31b gepumpt. Mittels der Ventilanordnung 7 werden die Aufbereitungskammern 31a, 31b jeweils über die Entsorgungsleitung 6 mit dem Entsorgungsauslass 5 fluidleitend verbunden, wobei die Ausgangs-Sperrventile 71a, 71b und das Rückführ-Sperrventil 72 geschlossen und die Ausleit-Sperrventile 74a, 74b sowie das Entsorgungs-Sperrventil 73 geöffnet sind. Über die Verbindungsleitung 47 und das geöffnete Entsorgungs-Sperrventil 73 kann das mit Schmutzpartikeln angereicherte Wasser aus dem jeweiligen Aufbereitungsbehälter 34a, 34b über die Entsorgungsleitung 6 an den Entsorgungsauslass 5 geleitet und entsorgt werden.

Im zweiten Entsorgungszustand können beide Pumpen 22a, 22b gleichzeitig oder nacheinander aktiviert werden, wobei dann zweckmäßigerweise nur jene Aufbereitungskammern 31a, 31b mit dem Entsorgungsauslass 5 fluidleitend verbunden ist in die Wasser mittels der jeweiligen Pumpe 22a, 22b hindurchgepumpt wird.

Im Ausführungsbeispiel ist vorgesehen, dass die Aufbereitungsbehälter 34a, 34b vollständig in der Primärfilterkammer 11 angeordnet sind. Dies ist nicht zwingend, z.B. könnten die Aufbereitungsbehälter 34a, 34b außerhalb der Primärfilterkammer 11 angeordnet sein. Durch das Vorsehen der Aufbereitungsbehälter 34a, 34b in der Primärfilterkammer 11 ist eine kompakte Bauweise der Filteranlage 1 realisiert. Auch die Pumpkammer 21a könnte in einer Abwandlungsform der Filteranlage in einem vom Behälter 8 unabhängigen weiteren Behälter angeordnet sein.

Abweichend vom Ausführungsbeispiel der Fig. 1 könnte der jeweilige Aufbereitungsbehälter in einer Abwandlungsform ausgangsseitig eine direkt daran anschließende Rückführleitung aufweisen, die eine Rückführmündung aufweist, die unterhalb des Normalwasserpegels in den Sammelbereich mündet. Auch in diesem Fall weist die jeweilige Rückführleitung ein Rücklauf-Sperrventil auf, welches im Normalbetriebszustand geschlossen ist. Im Weiteren wäre es auch möglich, die in Fig. 1 gezeigten Ausgangsleitungen 33a, 33b durch eine gemeinsame Ausgangsleitung zu ersetzen, wobei dann die Filteranlage nur einen einzigen Auslass aufweisen könnte.

Die in Fig. 1 und 2 dargestellten Ventile der Ventilanordnung 7 sind von einem Benutzer der Filteranlage 1 manuell bedienbar. In den Figuren sind die Ventile der Ventilanordnung als Schieber eingezeichnet. Auch andere Bauformen von Ventilen, z.B. Kugelventile, sind möglich. Im Weiteren wäre es auch denkbar, die Ventile der Ventilanordnung 7, z.B. mittels elektrischer Schalter elektromechanisch oder pneumatisch, und/oder die Pumpen und/oder die Fördereinrichtung, insbesondere in Abhängigkeit von gemessenen Werten zur Wasserqualität etc., voll- oder teilautomatisiert anzusteuern.

Im Rückführrohr 53, das den Ablauf 52 des Beckens 51 mit dem Einlass 2 verbindet, könnte ein zusätzlicher Filter, z.B. ein Vliesfilter, zur Grobabscheidung von Schmutz aus dem zu reinigenden Wasser angeordnet sein. Dies ist in den Figuren nicht gesondert dargestellt.

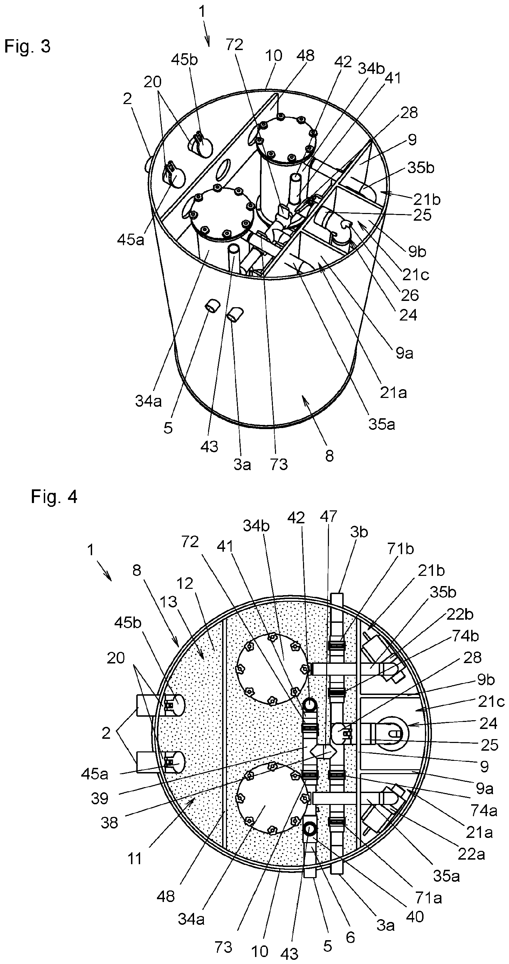

In den Fig. 3 bis 7 ist ein zweites Ausführungsbeispiel einer Filteranlage 1 gemäß der Erfindung dargestellt. In den Fig. 3 bis 7 ist die Filteranlage 1 aus Gründen der Übersichtlichkeit mit abgenommenem Deckel gezeigt. Zudem ist der Schüttschichtfilter in den Fig. 3 und 5-7 nicht dargestellt. Die Filteranlage 1 des zweiten Ausführungsbeispiels basiert auf den schematischen Darstellungen der Fig. 1 und 2, sodass in den Erläuterungen zum zweiten Ausführungsbeispiel hauptsächlich auf die spezifischen Merkmale bzw. die konkrete Ausführung der Filteranlage 1 Bezug genommen wird. Im Weiteren wird auf Unterschiede gegenüber dem in den Fig. 1 und 2 dargestellten Ausführungsbeispiel hingewiesen. Abgesehen von den im Folgenden angeführten Unterschieden und Ergänzungen gelten die Erläuterungen zum ersten Ausführungsbeispiel auch beim zweiten Ausführungsbeispiel.

Im zweiten Ausführungsbeispiel ist vorgesehen, dass die Filteranlage 1 drei Pumpkammern 21a, 21b und 21c aufweist, wobei jeder der Pumpkammern 21a, 21b, 21c zumindest ein Teil des in der Primärfilterkammer 11 vorgereinigten Wassers zuführbar ist. Die unterhalb der Primärfilterkammer 11 angeordnete Bodenkammer 15, ist über Öffnungen 30 mit jeder der Pumpkammern 21a, 21b und 21c fluidleitend verbunden.

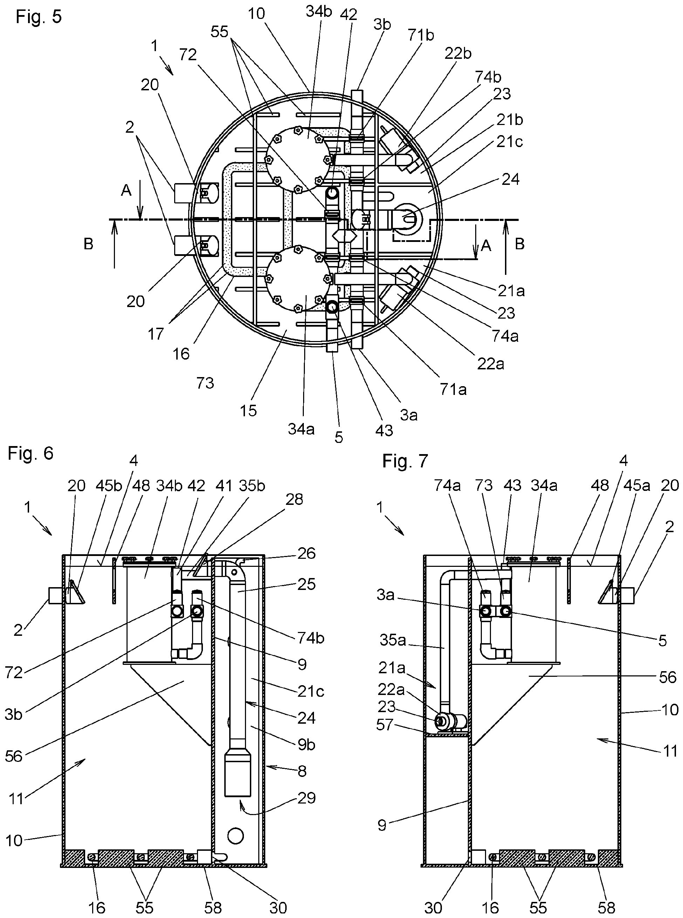

Die Pumpe 22a ist in der Pumpkammer 21a und die Pumpe 22b in der Pumpkammer 21b angeordnet. Die Fördereinrichtung 24 ist in der Pumpkammer 21c angeordnet. Die Zwischenwand 9 trennt jede der Pumpkammern 21a, 21b, 21c von der Primärfilterkammer 11 ab. Eine Trennwand 9a trennt die Pumpkammer 21a von der Pumpkammer 21c und eine Trennwand 9b die Pumpkammer 21b von der Pumpkammer 21c voneinander. Die Zwischenwände 9a und 9b weisen, wie in Fig. 6 ersichtlich, Öffnungen zum Durchtritt des vorgereinigten Wassers zwischen den Pumpkammern 21a, 21b, 21c ermöglichen.

Die jeweilige Pumpe 22a, 22b ist, wie in Fig. 7 angedeutet, an einer fluiddurchlässigen Befestigungswand 57 befestigt. Die Positionierung der jeweiligen Pumpe 22a, 22b in einem mittleren Bereich des Behälters 8 bezogen auf die Vertikalerstreckung ermöglicht es, dass die Pumpe 22a, 22b durch Abnahme des Deckels 49, z.B. zu Wartungszwecken gut erreicht und von außen überholt werden kann. Optional kann in der Pumpkammer 21c ein Schlangenwärmetauscher zur Erwärmung des vorgereinigten Wassers angeordnet sein.

Der Behälter 8 weist im zweiten Ausführungsbeispiel eine Aussteifung 48 zur Versteifung des Behälters 8 im beladenen Zustand auf, die im Sammelbereich 13, der in den Fig. 3 bis 7 nicht gesondert dargestellt ist, angeordnet ist.

In Fig. 5 ist die Trennwand 14 entfernt und gibt somit den Blick auf die Bodenkammer 15 frei. In der Bodenkammer 15 sind im zweiten Ausführungsbeispiel Stegbleche 55 angeordnet, auf denen sich die Trennwand 14 abstützt, was jedoch nicht gesondert dargestellt ist. Zwischen den Stegblechen 55 ist das Rohr 16 hindurchgeführt, mit dem, wie im Zusammenhang mit dem ersten Ausführungsbeispiel bereits ausgeführt, über Perforationen 17 Luft in die Bodenkammer 15 und die Primärfilterkammer 11 eingelassen werden kann.

Die Außenwände 10 des Behälters 8 sind im gezeigten Ausführungsbeispiel kreiszylindrisch ausgebildet und mit dem Boden 58 dicht verschweißt. Der Behälter 8 besteht im Ausführungsbeispiel aus Kunststoff, insbesondere Polyethylen. Auch ein anderer Kunststoff oder Metall, z.B. Stahl, insbesondere Edelstahl, kann grundsätzlich zur Ausbildung des Behälters verwendet werden.

Die Aufbereitungsbehälter 34a, 34b weisen nicht näher bezeichnete abnehmbare Deckel auf, um das Filtermedium 32, das in den Figuren ebenfalls nicht gesondert eingezeichnet ist, bei Bedarf auszutauschen oder den Eingangsbereich der jeweiligen Aufbereitungskammer 31a, 31b zu reinigen.

Der Behälter 8 weist im Ausführungsbeispiel zwei Konsolen 56 auf, auf denen der jeweilige Aufbereitungsbehälter 34a, 34b befestigt ist. Die jeweilige Konsole 56 ist an der Zwischenwand 9 befestigt.

Im Unterschied zum ersten Ausführungsbeispiel weist die Filteranlage 1 im zweiten Ausführungsbeispiel zwei Einlässe 2 und zwei Wasserzuführleitungen 20 auf, in denen jeweils eine Rücklaufsperre 45a, 45b angeordnet ist.

Das Verfahren zum Reinigen von Wasser ist analog zu den Erläuterungen zum ersten Ausführungsbeispiel auch auf das zweite Ausführungsbeispiel übertragbar, wobei die jeweilige Pumpe 22a, 22b bzw. die Fördereinrichtung 24 das Wasser aus der jeweiligen Pumpkammer 21a, 21b bzw. 21c ansaugt. Insbesondere die Ventilanordnung 7 entspricht jener des ersten Ausführungsbeispiels.

In den gezeigten Ausführungsbeispielen ist vorgesehen, dass die Filteranlage 1 zwei Pumpen 22, 22b bzw. zwei Aufbereitungsbehälter 34a, 34b aufweist. Die Ausführung mit zwei Pumpen und/oder Aufbereitungsbehältern erhöht die Ausfallsicherheit der Filteranlage. Dies ist jedoch nur eine mögliche Ausführungsform der erfindungsgemäßen Filteranlage. In einer anderen Variante wäre es denkbar und möglich, dass die Filteranlage nur einen Aufbereitungsbehälter und zumindest eine Pumpe, z.B. zwei Pumpen, zur Zufuhr von vorgereinigtem Wasser in den Aufbereitungsbehälter aufweist. Weiters wäre es alternativ auch möglich, dass die Filteranlage mehr als zwei Aufbereitungsbehälter und zumindest eine Pumpe, insbesondere zwei oder mehr Pumpen, aufweist, wobei dann eine entsprechende Anzahl von Ausgangs-Sperrventilen und/oder Ausleit-Sperrventilen vorzusehen ist.

Grundsätzlich ist es denkbar, dass die Filteranlage nur eine Pumpe aufweist, die beide Aufbereitungsbehälter mit vorgereinigtem Wasser versorgt. Zum Umschalten könnte ein Umschaltventil vorgesehen sein, das einen abwechselnden Betrieb mit jeweils einem der Aufbereitungsbehälter ermöglicht. Es wäre auch denkbar und möglich, dass die Aufbereitungsbehälter in Serie geschaltet sind, d.h., dass die Aufbereitungsbehälter nacheinander vom vorgereinigten Wasser durchströmt werden.

Auch im zweiten Ausführungsbeispiel sind die Sperrventile als Schieber ausgeführt. Andere Ausführungen sind möglich, wie oben erläutert. Im Weiteren ist es auch denkbar und möglich, z.B. das Ausgangs-Sperrventil und das Ausleit-Sperrventil durch ein einziges Umschaltventil zu ersetzen, mit dem das gereinigte Wasser aus der Aufbereitungskammer 31a, 31b wahlweise dem Auslass 3a, 3b oder der Verbindungsleitung 47 zuführt werden kann. Gleiches gilt für das Rücklauf-Sperrventil und das Entsorgungs-Sperrventil, das ebenfalls durch ein Umschaltventil, auch 3/2-Wegeventil genannt, ersetzt werden könnte.

Ist das Becken 51 in einen Boden bzw. einen Untergrund eingelassen, so ist es vorteilhaft, wenn die Filteranlage 1, ebenfalls in den Untergrund eingebracht ist. Dadurch ist im Wesentlichen nur der Deckel 49 des Behälters 8 von außen ersichtlich. Zudem ist ein Frostschutz der Filteranlage 1 durch den umgebenden Untergrund gegeben. Die in den Fig. 3 bis 7 dargestellte zweite Ausführungsform ist durch ihre Ausführung in Form des kompakten Behälters 8, vorteilhaft in den Untergrund einbringbar. Auch andere Ausführungsformen des Behälters, z.B. in Quaderform sind denkbar und möglich.

Es könnte auch vorgesehen sein, dass im Bereich der Pumpkammer 21c, in der die Fördereinrichtung 24 angeordnet ist, eine zusätzliche UV-Behandlungseinrichtung zur Desinfektion des vorgereinigten Wassers angeordnet ist. Derartige Desinfektionsanlagen sind hinlänglich bekannt. Auch können in der Filteranlage 1, z.B. im Sammelbereich 13 Heizelemente zur Erwärmung des Wassers, insbesondere im Umlaufbetriebszustand, vorgesehen sein.

Im ersten und zweiten Ausführungsbeispiel erstreckt sich der jeweilige Aufbereitungsbehälter 34a, 34b über weniger als die Hälfte der Vertikalerstreckung der Primärfilterkammer 11. Dies ist jedoch nicht zwingend. Es ist in einer Abwandlungsform denkbar und möglich, dass sich der Aufbereitungsbehälter über mehr als 75% der Vertikalerstreckung der Primärfilterkammer 11 erstreckt.

Die in den Ausführungsbeispielen gezeigte Filteranlage eignet sich insbesondere für über das Zuführrohr zuführbare spezifische Volumenströme von 20m³/h bis 60m³/h, z.B. 45 m³/h.

Abweichend vom gezeigten Ausführungsbeispiel könnte die zumindest eine Pumpe außerhalb der Pumpkammer angeordnet sein. Insbesondere kann die Pumpe der Filteranlage außerhalb des Behälters oder in einer zusätzlichen, von der zumindest einen Pumpkammer abgetrennten, Maschinenkammer des Behälters angeordnet sein. Die Eingangsseite der zumindest einen Pumpe saugt über eine Saugleitung vorgereinigtes Wasser aus zumindest einer der Pumpkammern. Die Druckleitung verbindet die Pumpe, analog zum gezeigten Ausführungsbeispiel, fluidleitend mit dem Aufbereitungsbehälter.

In Anwendungsfällen, in denen der Behälter nicht oder nur teilweise in den Untergrund eingebracht wird, ist denkbar und möglich, in dem zumindest einen Zuführrohr eine Zusatzpumpe zum Einbringen von zu reinigendem Wasser in den Sammelbereich vorzusehen. Die Zusatzpumpe kann z.B. in einem Skimmer o.ä. angeordnet sein. Alternativ könnte die Zusatzpumpe Teil der Filteranlage sein. Der Normalwasserpegel der Filteranlage liegt bei dieser Abwandlungsform in der Regel oberhalb des Wasserspiegels des Beckens. Bei dieser Abwandlungsform ist es günstig, im Behälter eine mit der Atmosphäre verbundene Sammelkammer vorzusehen, in die die Ausgangsleitung der jeweiligen Aufbereitungskammer zur Zufuhr von gereinigtem Wasser in die Sammelkammer mündet. Der zumindest eine Auslass der Filteranlage ist in einem oberen Abschnitt der Sammelkammer angeordnet. Bei Erreichen eines Füllpegels der Sammelkammer, auf dem der zumindest eine Auslass liegt, fließt gereinigtes Wasser über den Auslass und das daran anschließende Rückführrohr unter Einwirkung der Schwerkraft in das Becken zurück. Alternativ könnte eine zusätzliche Pumpe zum Rückpumpen von Flüssigkeit aus der Sammelkammer in das Becken vorgesehen sein. Die Sammelkammer könnte zusätzlich in einem unteren Bereich mit zumindest einer der Pumpkammern und/oder der Bodenkammer fluidleitend verbunden sein, sodass der Wasserstand in der Sammelkammer dem Wasserstand in der zumindest einen Pumpkammer und/oder dem Wasserstand im Sammelbereich der Primärfilterkammer entspricht.

In den gezeigten Ausführungsformen weist die Filteranlage 1 eine Primärfilterkammer 11 mit einem Schüttschichtfilter auf. Es sind auch Ausführungsformen erfindungsgemäßer Filteranlagen möglich, die zumindest eine weitere Filterstufe mit einem weiteren Schüttschichtfilter aufweisen. Beispielsweise könnte eine Sekundärfilterkammer vorgesehen sein, in der ein zweiter Schüttschichtfilter angeordnet ist. Das zu reinigende Wasser durchfließt dann den über der Primärfilterkammer ausgebildeten Sammelbereich, und wird in der Primärfilterkammer vorgereinigt. Im Weiteren wird das vorgereinigte Wasser der Sekundärfilterkammer zugeführt, in der eine weitere Reinigung des Wassers stattfindet. An die Sekundärfilterkammer schließt im Weiteren zumindest eine Pumpkammer an, die das in der Sekundärfilterkammer gereinigte Wasser dem zumindest einen Aufbereitungsbehälter zuführt. Unterhalb der Primärfilterkammer und der Sekundärfilterkammer könnte jeweils eine Bodenkammer, wie oben erläutert, vorgesehen sein, um Schmutzpartikel aus den Schüttmaterialien der jeweiligen Schüttschichtfilter zurück zu spülen. Derartige Anordnungen mit zwei oder mehr, insbesondere horizontal nebeneinander angeordneten Schüttschichtfiltern werden häufig als Schlangenfilter bezeichnet, wobei eine Zwischenwand die Primärfilterkammer von der Sekundärfilterkammer trennt. Bei Anordnungen mit mehreren Schüttschichtfiltern kann vorgesehen sein, dass oberhalb des jeweiligen Schüttschichtfilters jeweils eine Rückführleitung mit einer Rückführmündung angeordnet ist, um während oder nach dem Rückspülen des jeweiligen Schüttschichtfilters Schmutzwasser von oberhalb des jeweiligen Schüttschichtfilters aus der Filteranlage abzuführen und zu entsorgen. Mittels der Ventilanordnung sind Verschaltungen wie in den erläuterten Ausführungsbeispielen möglich. Im Weiteren können Ausführungen mit mehreren Schüttschichtfiltern eine Fördereinrichtung zur Anreicherung mit Sauerstoff aufweisen.

**Legende zu den Hinweisziffern:**

| | | | |
|---|---|---|---|
| 1 | Filteranlage | 24 | Fördereinrichtung |
| 2 | Einlass | 25 | Ausgangsrohr |
| 3a | Auslass | 26 | Luftzuführleitung |
| 3b | Auslass | 27 | Luftanschluss |
| 4 | Normalwasserpegel | 28 | Rücklaufsperre |
| 5 | Entsorgungsauslass | 29 | Einlassöffnung |
| 6 | Entsorgungsleitung | 30 | Öffnung |
| 7 | Ventilanordnung | 31a | Aufbereitungskammer |
| 8 | Behälter | 31b | Aufbereitungskammer |
| 9 | Zwischenwand | 32 | Aufbereitungsmedium |
| 9a | Zwischenwand | 33a | Ausgangsleitung |
| 9b | Zwischenwand | 33b | Ausgangsleitung |
| 10 | Außenwand | 34a | Aufbereitungsbehälter |
| 11 | Primärfilterkammer | 34b | Aufbereitungsbehälter |
| 12 | Schüttmaterial | 35a | Druckleitung |
| 13 | Sammelbereich | 35b | Druckleitung |
| 14 | Trennwand | 37a | T-Stück |
| 15 | Bodenkammer | 37b | T-Stück |
| 16 | Rohr | 38 | T-Stück |
| 17 | Perforation | 39 | T-Stück |
| 18 | Öffnung | 41 | Rückführleitung |
| 19 | Luftanschluss | 42 | Rückführmündung |
| 20 | Wasserzuführleitung | 43 | Überlauf |
| 21a | Pumpkammer | 44 | Überlaufwasserpegel |
| 21b | Pumpkammer | 45a | Rücklaufsperre |
| 21c | Pumpkammer | 45b | Rücklaufsperre |
| 22a | Pumpe | 46 | Niedrigwasserpegel |
| 22b | Pumpe | 47 | Verbindungsleitung |
| 23 | Eingangsseite | 48 | Aussteifung |
| 49 | Deckel | | |
| 51 | Becken | | |
| 52 | Ablauf | | |
| 53 | Zuführrohr | | |
| 54 | Rückführrohr | | |
| 55 | Stegblech | | |
| 56 | Konsole | | |
| 57 | Befestigungswand | | |
| 58 | Boden | | |
| 71a | Ausgangs-Sperrventil | | |
| 71b | Ausgangs-Sperrventil | | |
| 72 | Rücklauf-Sperrventil | | |
| 73 | Entsorgungs-Sperrventil | | |
| 74a | Ausleit-Sperrventil | | |
| 74b | Ausleit-Sperrventil | | |

## Patentansprüche

1. Filteranlage (1) zur Reinigung von Wasser, insbesondere für Schwimmteiche, Schwimmbecken, Fischteiche oder Fischbecken, aufweisend:
- mindestens einen Einlass (2) zum Zuführen des zu reinigenden Wassers in die Filteranlage (1) und mindestens einen Auslass (3a, 3b) zum Abführen des gereinigten Wassers aus der Filteranlage (1),
- eine Primärfilterkammer (11), in die zumindest ein, einen Schüttschichtfilter bildendes, Schüttmaterial (12) zur Filtration des zu reinigenden Wassers eingefüllt ist,
- zumindest eine stromabwärts der Primärfilterkammer (11) angeordnete Aufbereitungskammer (31a, 31b), die ein Aufbereitungsmedium (32) zur weiteren Reinigung des in der Primärfilterkammer (11) vorgereinigten Wassers enthält,
- mindestens eine Pumpe (22a, 22b), mit welcher in der Primärfilterkammer (11) vorgereinigtes Wasser durch die Aufbereitungskammer (31a, 31b) förderbar ist,
- eine Ausgangsleitung (33a, 33b) zum Ausleiten des in der Aufbereitungskammer (31a, 31b) gereinigten Wassers zum Auslass (3a, 3b) der Filteranlage (1),
**dadurch gekennzeichnet, dass** die Filteranlage (1) im Weiteren eine Rückführleitung (41) aufweist, die eine Rückführmündung (42) besitzt, welche in einem oberhalb des Schüttmaterials (12) ausgebildeten Sammelbereich (13) der Primärfilterkammer (11) unterhalb eines Normalwasserpegels (4) der Filteranlage (1) liegt, und dass mittels einer Ventilanordnung (7) der Filteranlage (1) in einem Normalbetriebszustand der Filteranlage (1) die Aufbereitungskammer (31a, 31b) ausgangsseitig über die Ausgangsleitung (33a, 33b) mit dem Auslass (3a, 3b) fluidleitend verbunden ist und die Rückführleitung (41) blockiert ist, und dass mittels der Ventilanordnung (7) in einem Umlaufbetriebszustand der Filteranlage (1) die Aufbereitungskammer (31a, 31b) ausgangsseitig über die Rückführleitung (41) mit der Rückführmündung (42) fluidleitend verbunden ist und die Ausgangsleitung (33a, 33b) blockiert ist, wobei mittels der Pumpe (22) Wasser vom Ausgang der Aufbereitungskammer (31a, 31b) über die Rückführleitung (41) in den Sammelbereich (13) der Primärfilterkammer (11) förderbar ist.

2. Filteranlage (1) nach Anspruch 1, **dadurch gekennzeichnet, dass** die zumindest eine Pumpe (22a, 22b) stromaufwärts der zumindest einen Aufbereitungskammer (31a, 31b) angeordnet ist und zumindest einen Teil des vorgereinigten Wassers durch die Aufbereitungskammer (31a, 31b) pumpt, wobei das gereinigte Wasser mittels der Ventilanordnung (7) wahlweise dem Auslass (3a, 3b) oder der Rückführmündung (42) zuführbar ist.

3. Filteranlage (1) nach Anspruch 2, **dadurch gekennzeichnet, dass** die Filteranlage (1) stromabwärts der Primärfilterkammer (11) mindestens eine Pumpkammer (21a, 21b, 21c) aufweist, wobei der mindestens einen Pumpkammer (21a, 21b, 21c) das in der Primärfilterkammer (11) vorgereinigte Wasser zugeführt ist, und dass eine Eingangsseite (23) der jeweiligen Pumpe (22a, 22b) vorgereinigtes Wasser aus der Pumpkammer (21a, 21b) saugt.

4. Filteranlage (1) nach Anspruch 3, **dadurch gekennzeichnet, dass** die Pumpe (22a, 22b), bzw. eine jeweilige der Pumpen (22a, 22b), in der Pumpkammer (21a, 21b) oder einer der Pumpkammern (21a, 21b) angeordnet ist.

5. Filteranlage (1) nach einem der Ansprüche 3 oder 4, **dadurch gekennzeichnet, dass** die Filteranlage (1) eine Bodenkammer (15) aufweist, über die die Primärfilterkammer (11) fluidleitend mit der zumindest einen Pumpkammer (21a, 21b, 21c) verbunden ist, wobei die Bodenkammer (15) unterhalb der Primärfilterkammer (11) angeordnet ist und durch eine Öffnungen (18) aufweisende Trennwand (14) von der Primärfilterkammer (11) getrennt ist und in der Bodenkammer (15) ein, Perforationen (17) aufweisendes, Rohr (16) zum Einbringen von Luft angeordnet ist.

6. Filteranlage (1) nach einem der Ansprüche 1 bis 5, **dadurch gekennzeichnet, dass** die Filteranlage (1) eine Entsorgungsleitung (6) zum Ableiten von Schmutzwasser, welches in der Filteranlage (1) abgeschiedenen Schmutz enthält, an einen Entsorgungsauslass (5) der Filteranlage (1) aufweist.

7. Filteranlage (1) nach Anspruch 6, **dadurch gekennzeichnet, dass** in einem ersten Entsorgungszustand der Filteranlage (1) mittels der Ventilanordnung (7) die Rückführmündung (42) über die Entsorgungsleitung (6) mit dem Entsorgungsauslass (5) der Filteranlage (1) fluidleitend verbunden ist und die Ausgangsleitung (33a, 33b) blockiert ist.

8. Filteranlage (1) nach Anspruch 6 oder 7, **dadurch gekennzeichnet, dass** in einem zweiten Entsorgungszustand mittels der Ventilanordnung (7) die zumindest eine Aufbereitungskammer (31a, 31b) über die Entsorgungsleitung (6) mit dem Entsorgungsauslass (5) fluidleitend verbunden ist und die Ausgangsleitung (33a, 33b) und die Rückführleitung (41) blockiert sind.

9. Filteranlage (1) nach einem der Ansprüche 1 bis 8, **dadurch gekennzeichnet, dass** die Filteranlage (1) eine Fördereinrichtung (24) aufweist, von der ein Teil des in der Primärfilterkammer (11) vorgereinigten Wassers über ein in den Sammelbereich (13) mündendes Ausgangsrohr (25) zurück in den Sammelbereich (13) förderbar ist.

10. Filteranlage (1) nach Anspruch 9, **dadurch gekennzeichnet, dass** die Fördereinrichtung (24) ein Luftheber ist, dessen Einlassöffnung (29) in der Pumpkammer (21a, 21c) oder einer der Pumpkammern (21a, 21c) liegt.

11. Filteranlage (1) nach einem der Ansprüche 5 bis 10, **dadurch gekennzeichnet, dass** die Filteranlage (1) einen, die Primärfilterkammer (11) und die mindestens eine Pumpkammer (21a, 21b, 21c) und die Bodenkammer (15) begrenzenden Behälter (8) aufweist, wobei zwischen der Primärfilterkammer (11) und der mindestens einen Pumpkammer (21a, 21b, 21c) eine Zwischenwand (9) des Behälters (8) angeordnet ist, die die Primärfilterkammer (11) und die mindestens eine Pumpkammer (21a, 21b, 21c) voneinander abtrennt.

12. Filteranlage (1) nach einem der Ansprüche 1 bis 11, **dadurch gekennzeichnet, dass** die zumindest eine Aufbereitungskammer (31a, 31b) in einem Aufbereitungsbehälter (34a, 34b) liegt, wobei der Aufbereitungsbehälter (34a, 34b) vollständig in der Primärfilterkammer (11) angeordnet ist.

13. Verfahren zur Reinigung von Wasser, insbesondere für Schwimmteiche, Schwimmbecken, Fischteiche oder Fischbecken, mittels einer Filteranlage (1), wobei die Filteranlage (1) aufweist:
- mindestens einen Einlass (2) zum Zuführen des zu reinigenden Wassers in die Filteranlage (1) und einen Auslass (3a, 3b) zum Abführen des gereinigten Wassers aus der Filteranlage (1),
- eine Primärfilterkammer (11), in die zumindest ein, einen Schüttschichtfilter bildendes, Schüttmaterial (12) zur Filtration des zu reinigenden Wassers eingefüllt ist,
- zumindest eine stromabwärts der Primärfilterkammer (11) angeordnete Aufbereitungskammer (31a, 31b), die ein Aufbereitungsmedium (32) zur weiteren Reinigung des in der Primärfilterkammer (11) vorgereinigten Wassers enthält,
- mindestens eine Pumpe (22a, 22b), mit welcher in der Primärfilterkammer (11) vorgereinigtes Wasser durch die Aufbereitungskammer (31a, 31b) förderbar ist,
- eine Ausgangsleitung (33a, 33b) zum Ausleiten des in der Aufbereitungskammer (31) aufbereiteten Wassers zum Auslass (3a, 3b) der Filteranlage (1),
wobei in einem Normalbetriebszustand der Filteranlage (1) zu reinigendes Wasser über den mindestens einen Einlass (2) dem Sammelbereich (13) der Primärfilterkammer (11) zugeführt wird und das zu reinigende Wasser im Schüttschichtfilter gefiltert wird und als vorgereinigtes Wasser den Schüttschichtfilter verlässt, und danach das vorgereinigte Wasser der Aufbereitungskammer (31a, 31b) zugeführt wird und in der Aufbereitungskammer (31a, 31b) weiter gereinigt wird und im Weiteren das in der Aufbereitungskammer (31a, 31b) gereinigte Wasser die Filteranlage (1) über den Auslass (3a, 3b) verlässt, **dadurch gekennzeichnet, dass** die Filteranlage (1) im Weiteren eine Rückführleitung (41) aufweist, die eine Rückführmündung (42) besitzt, welche in einem oberhalb des Schüttmaterials (12) ausgebildeten Sammelbereich (13) der Primärfilterkammer (11) unterhalb eines Normalwasserpegels (4) der Filteranlage (1) liegt, wobei im Normalbetriebszustand mittels der Ventilanordnung (7) die Aufbereitungskammer (31a, 31b) ausgangsseitig über die Ausgangsleitung (33a, 33b) mit dem Auslass (3a, 3b) fluidleitend verbunden ist und die Rückführleitung (41) blockiert ist, und dass in einem Umlaufbetriebszustand der Filteranlage (1) mittels der Ventilanordnung (7) die Aufbereitungskammer (31a, 31b) ausgangsseitig über die Rückführleitung (41) mit der Rückführmündung (42) fluidleitend verbunden ist und die Ausgangsleitung (33a, 33b) blockiert ist, wobei Wasser, welches die Aufbereitungskammer (31a, 31b) durchlaufen hat, vom Ausgang der Aufbereitungskammer (31a, 31b) über die Rückführleitung (41) in den Sammelbereich (13) der Primärfilterkammer (11) zurückgefördert wird.

14. Verfahren nach Anspruch 13, **dadurch gekennzeichnet, dass**, zum Rückspülen der Primärfilterkammer (11) im Bodenbereich der Primärfilterkammer (11) Luft eingeblasen wird und dass während des Rückspülens oder nach dem Rückspülen der Primärfilterkammer (11) in einem ersten Entsorgungszustand der Filteranlage (1) Schmutzwasser über eine Entsorgungsleitung (6), welche über die Ventilanordnung (7) mit der Rückführmündung (42) verbunden ist, einem Entsorgungsauslass (5) der Filteranlage (1) zugeführt wird und entsorgt wird.

15. Verfahren nach einem der Ansprüche 13 oder 14, **dadurch gekennzeichnet, dass** in einem zweiten Entsorgungszustand der Filteranlage (1) Wasser, welches die mindestens eine Aufbereitungskammer (31a, 31b) durchlaufen hat, mittels der Ventilanordnung (7) über die Entsorgungsleitung (6) dem Entsorgungsauslass (5) zugeführt wird und entsorgt wird.

16. Verfahren nach einem der Ansprüche 13 bis 15, **dadurch gekennzeichnet, dass** zumindest ein Teil des vorgereinigten Wassers nach dem Durchlaufen der Primärfilterkammer (11) mittels einer Fördereinrichtung (24), vorzugsweise durch Einleiten von Luft, über ein in den Sammelbereich (13) mündendes Ausgangsrohr (25) zurück in den Sammelbereich (13) gefördert wird.
